(19) Europäisches Patentamt

European Patent Office

Office européen des brevets

(11) **EP 1 481 401 B1**

(12) **EUROPEAN PATENT SPECIFICATION**

(45) Date of publication and mention
of the grant of the patent:
**16.11.2005 Bulletin 2005/46**

(51) Int Cl.⁷: **G21C 19/42**, C25C 3/34

(21) Application number: **03704816.2**

(86) International application number:
**PCT/GB2003/000792**

(22) Date of filing: **24.02.2003**

(87) International publication number:
**WO 2003/073436 (04.09.2003 Gazette 2003/36)**

(54) **ELECTROCHEMICAL CELL FOR METAL PRODUCTION**

ELEKTROLYSE-ZELLE ZUR METALLPRODUKTION

CELLULE ELECTROCHIMIQUE POUR LA PRODUCTION DE METAL

(84) Designated Contracting States:
**FR GB**

(30) Priority: **28.02.2002 GB 0204671**

(43) Date of publication of application:
**01.12.2004 Bulletin 2004/49**

(73) Proprietor: **British Nuclear Fuels PLC
Warrington, Cheshire WA3 6AS (GB)**

(72) Inventors:
• **LEWIN, Robert, Glyn, British Nuclear Fuels Plc
Seascale, Cumbria CA20 1PG (GB)**
• **THIED, Robert, Charles,
British Nuclear Fuels Plc
Seascale, Cumbria CA20 1PG (GB)**

(74) Representative: **Harrison Goddard Foote
Belgrave Hall
Belgrave Street
Leeds LS2 8DD (GB)**

(56) References cited:
| WO-A-00/40782 | WO-A-01/41152 |
| US-A- 3 982 928 | US-A- 5 160 367 |
| US-A- 5 378 325 | US-A- 5 650 053 |
| US-B1- 6 540 902 | |

## Description

### Field of the Invention

This invention relates to methods for the production of metals from oxides present in spent nuclear fuels and is particularly applicable to -the production of actinides, specifically uranium. Methods of the present invention can be used in the treatment of irradiated fuels for producing actinides in metallic form suitable for use as feeds in subsequent electrorefining processes.

### Background to the Invention

In the established art, two processes have been developed for the treatment of irradiated nuclear fuel making use of molten salts. As used herein, the term "molten salts" is intended to cover salts such as lithium chloride which melts at an elevated temperature and also ionic liquids which typically are liquid at room temperature or which melt at a temperature up to about $100°C$.

The Dimitrovgrad SSC-RIAR process makes use of chemical oxidants (chlorine and oxygen gases) to react with powdered uranium dioxide fuel to form higher oxidation state compounds such as $UO_2Cl_2$ which are soluble in the molten salt. In an electrochemical cell the uranium compounds are reduced to $UO_2$ at the cathode, forming a dendritic deposit. This process has both technical and environmental limitations.

The second process, developed by the Argonne National Laboratory (ANL) is fundamentally an electrorefining technology which uses direct current to anodically oxidise uranium to form uranium ions in the molten salt electrolyte. At the cathode the uranium is reduced and electrodeposited as dendritic uranium metal.

The ANL process requires a metal feed. If oxide fuels are to be treated, it is necessary to reduce the uranium oxide (usually $UO_2$ pellets) to the metal. This reduction process is carried out chemically, using lithium metal in a LiCl or LiCl/KCl molten salt, or a Li/Cd alloy, at 500 to $600°C$. Alternatively, a salt transport process can be used involving a Cu-Mg-Ca alloy and molten $CaCl_2$ salt. However, in both reduction methods the by products, $Li_2O$ and CaO respectively, need to be recovered from the molten salt phase by an electrolysis step. Effectively this means a two stage process.

A disadvantage of the lithium reduction process for producing a metallic feed from an oxide is the production of $Li_2O$ by-product. This requires recycle to make the process economic, and this is done by an electrolytic recovery of lithium metal. Hence this is a two stage process, comprising a reduction step followed by a lithium recovery stage.

The prior art discloses many processes and apparatuses for the reduction of metal oxides to metals by cathodic electrolysis of the oxide in a molten salt Thus, for example US-A-5378325 discloses a low temperature salt bath for the electrolysis of metal oxides to the corresponding metal, the bath comprising fluoride and chloride salts and including a low surface area carbonaceous anode. Alternatively, WO-A-00/40872 teaches a cell for the electrowinning of aluminium from alumina dissolved in a fluoride-containing molten electrolyte, the cell being provided with non-carbon, metal-based anodes arranged to facilitate the circulation of electrolyte. As with these disclosures, however, much of the known prior art is merely concerned with metal oxides in general, and makes no mention of the metal oxides to be found in spent nuclear fuel.

In co-pending PCT patent application WO-A-01/41152 there is disclosed a single step process for reducing to metallic form a metal oxide present in spent nuclear fuel, the process comprising cathodically electrolysing the oxide in the presence of a molten salt electrolyte, the potential of the cathode being controlled so as to favour oxygen ionisation over deposition of the metal from the cations present in the molten salt.

The process thereby involves the use of a single electrochemical process to reduce the metal oxide fuel to a metallic form, with oxygen, CO or $CO_2$ produced as the only by-products. The potential of the cathode is maintained and controlled so that only oxygen ionisation occurs and not the deposition of metal (eg Ca) from the cations (eg Ca ions) in the fused salt. Typically, the oxide comprises an actinide oxide, such as uranium oxide or irradiated uranium oxide.

US-B-6540902 describes a similar single step process for reducing to metallic form a metal oxide present in spent nuclear fuel, the process comprising cathodically electrolysing the oxide in the presence of a molten salt electrolyte, the potential of the cathode being controlled so as to prevent production of reductant metal from ions in the electrolyte, whilst the potential of the anode is controlled so as to prevent anode dissolution and gas evolution other than oxygen.

The present inventors have, however, now effected an improvement to the processes described in WO-A-01/41152 and US-B-6540902, thereby allowing a more practical, efficient and financially viable process to be adopted in the production of metals from oxides. The new process is particularly beneficial in that it facilitates the ramoval of bolted and screwed fittings from the apparatus used for the production of the metal.

### Statements of Invention

Thus, according to a first aspect of the present invention there is provided an apparatus for performing a process for reducing to metallic form metal oxides, the said metal oxides comprising metal oxides present in spent nuclear fuel, wherein the apparatus comprises an electrochemical cell which comprises a body or housing, a cathode container, and a cathode connector, said body or housing being maintained as the cathode, and said electrochemical cell being free from bolted or screwed fittings.

The body or housing of the cell which comprises the apparatus according to the first aspect of the invention is most conveniently maintained as the cathode by the provision of an electrical connection from a power supply, provided by means of a connector from the cathode terminal to the body or housing of the cell. Typically, said connector comprises a bolted connection, but this is positioned externally to the cell. No bolted or screwed connections are present within the cell, wherein a cathode connector is provided which is affixed to an internal surface of the cell, most preferably the base of the cell, generally by welding. Preferably said cathode connector comprises a cathode rail.

In operation, the body or housing of the cell is maintained as the cathode, and said cathode is brought-into contact with the cathode container by means of the cathode connector. Thus, contact is made between the cathode container and the cathode connector in order to facilitate the electrolytic process. Contact may be most conveniently achieved by means of a simple press connection between the two components.

The cathode container preferably comprises a basket, such as a mesh basket, or vessel, typically a metal oxide retaining vessel, and - most preferably - comprises an assembly of such baskets or vessels. In order to effect electrical connection between such an assembly of cathode containers and the cell body during operation of the cell, it is necessary to provide a multiplicity of connectors and to effect contact between individual cathode baskets or vessels and individual connectors, preferably by means of a multiplicity of press connections.

Preferably the oxide is in contact with the cathode container and it is preferred that the cathode is in the form of a mesh basket or, most preferably, an assembly of mesh baskets, with the oxide being contained within the said baskets, In this case, contact between the assembly of cathode containers and the cathode connectors is most simply achieved when the cathode connectors are in the form of a multiplicity of cathode rails which are welded to the base of the cell, allowing press contact to be brought about by the weight of the oxide feedstock in the cathode basket. This represents the most preferred embodiment of the first aspect of the invention. The anode may be any suitable inert anode, such as carbon.

According to a second aspect of the present invention, there is provided a process for reducing to metallic form metal oxides, the said metal oxides comprising metal oxides present in spent nuclear fuel, the process comprising cathodically electrolysing the oxide in the presence of a molten salt electrolyte in an apparatus according to the first aspect of the invention, the potential of the cathode being controlled so as to favour oxygen ionisation over deposition of metal from the cations present in the molten salt.

The molten salt electrolyte may be any suitable molten salt or mixture of such salts, for instance chloride salts, preferably $CaCl_2$ and/or $BaCl_2$.

Preferably, the oxide treated by the process according to the second aspect of the invention comprises an actinide oxide, such as uranium oxide or irradiated uranium oxide, or mixed uranium/plutonium oxides. The uranium oxide is commonly uranium dioxide. Alternatively, the oxide may comprise the oxide of a metal such as zirconium or hafnium.

In the said process, the fuel may be first treated mechanically to remove its zircaloy cladding before it is added to the electrolytic cell. Alternatively, the zircaloy cladding may be treated with the fuel. The fuel may require to be sheared into sections of small length prior to treatment in order to expose the oxide fuel to the molten salt

Said oxide may be in any physical form, and this is generally dependent on the particular chemical nature of the spent nuclear fuel and the processing to which the material has previously been subjected. For example, the fuel may comprise a powder, an amorphous mass, or a dense solid agglomerate. In any event, the material may be treated according to the method of the second aspect of the present invention by connection to an electrical circuit such that it serves as the cathode during electrolysis; as previously disclosed, connection to the circuit may be conveniently effected by the use of a cathode basket, into which the material is placed.

The process provides a single electrochemical process to reduce the metal oxide fuel to a metallic form, with oxygen produced as the only by-product. The potential of the cathode is maintained and controlled so that only oxygen ionisation occurs and not the deposition of metal (eg Ca) from the cations (eg Ca ions) in the fused salt.

The process according to the second aspect of the invention provides a more practical, efficient and financially viable means for the production of metal from oxides. The electrical continuity of the system which is provided is effective since all the components are held in the cathodic potential region and are, therefore, metallic in nature.

**Detailed Description of the Invention**

In order to carry out an embodiment of the process according to the second aspect of the present invention, using a metal oxide which comprises spent nuclear fuel, an electrolytic cell is assembled which has a carbon anode, a mesh basket cathode and a cathode rail connector welded to the base of the cell. Irradiated oxide fuel is placed in the mesh basket. The electrolyte consists of a molten salt or a mixture of such salts comprising, for example, chloride salts such as $CaCl_2$ or $BaCl_2$. A voltage is applied between the cathode and the anode. At the cathode the reaction involves the diffusion of oxygen atoms to the surface of the solid, followed by ionisation according to the reaction:

$$O_2 + 4e^- \rightarrow 2\,O^{2-}.$$

The oxide ions which are produced dissolve in the electrolyte and are transferred to the anode where they are re-oxidised to produce oxygen, CO or $CO_2$ gases. The potential at the cathode may be controlled, via a third reference electrode, to ensure that the reaction occurring at the cathode is oxygen ionisation and not deposition of eg Ca metal from the cations in the fused salt. Electrolysis at elevated temperatures results in an increased rate of oxygen diffusion, thereby also encouraging ionisation rather than metal deposition.

After electrolysis the irradiated fuel is left in the form of a metallic solid at the cathode. This metallic solid, which contains fission products, can be removed or used directly as the feed for an electrorefining process. The remaining components of the cell may be re-used immediately without the need for any cleaning.

In an alternative embodiment in accordance with the present invention the electrolytic ionisation of oxygen and the electrorefining processes are carried out in the same cell and the same salt system. In such cases a second cathode, or cathode assembly, may be required.

It is to be emphasised that the advantage of the apparatus and process of the present invention is that they facilitate the performance of an effectively single stage process which provides advantages over the prior art in terms of practicality, efficiency and cost. The process is advantageously used for the treatment of irradiated oxide nuclear fuel, possibly in the form of pellets and, most particularly, is applied to fuels such as uranium oxide, and mixed uranium and plutonium fuels.

In order to fully illustrate the above and other features of the apparatus according to the first aspect of the invention, without in any way limiting the scope of the invention, a preferred embodiments will now be described with reference to the drawing.

**Description of the Drawing**

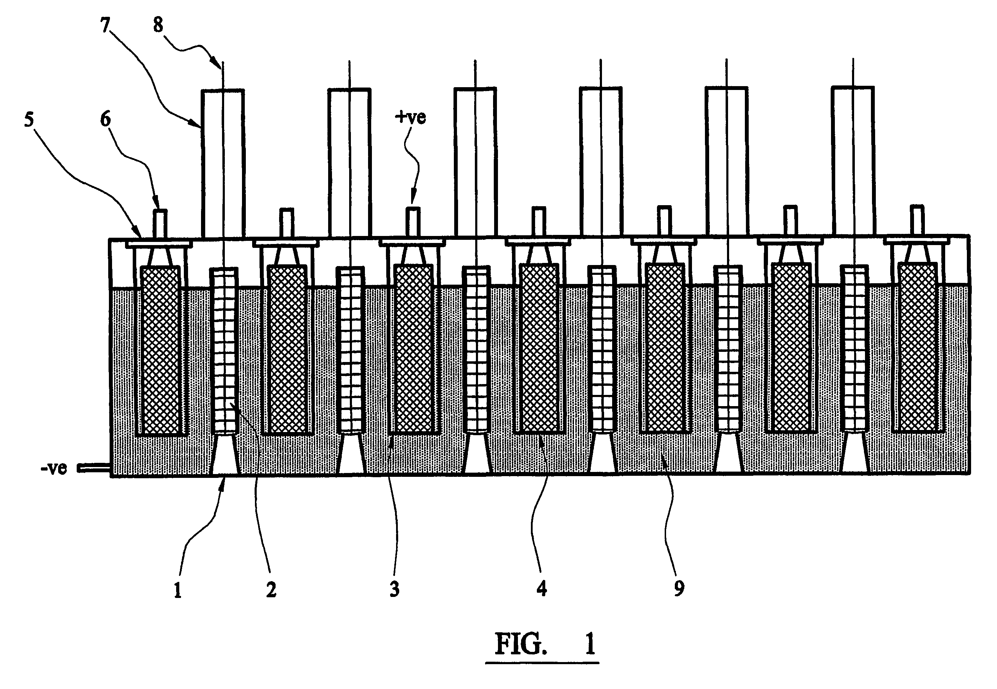

Figure 1 shows an apparatus according to the first aspect of the invention which comprises a series of electrolytic cells, the bodies and housings of which are, in use, connected by means of cathode rails 1 to cathode baskets 2. The cells also comprise anodes 4, surrounded by anode protective sleeves 3, and connected to an electrical supply by means of electrical connections 6, these being protected by insulation shrouds 5.

In operation, the cathode baskets 2, which are equipped with basket handles 8, cooled by means of cooling chambers 7, are loaded with spent nuclear fuel pellets and lowered into the electrolyte 9 to a point at which contact is made with cathode rails 1 and, thereby, with the cell housing, which is maintained as the cathode, thereby allowing processing to commence.

**Claims**

1. An apparatus for performing a process for reducing to metallic form metal oxides, the said metal oxides comprising metal oxides present in spent nuclear fuel, wherein the apparatus comprises an electrochemical cell which comprises a body or housing, a cathode container, and a cathode connector, said body or housing being maintained as the cathode, and said electrochemical cell being free from bolted or screwed fittings.

2. An apparatus as claimed in claim 1 wherein said cathode connector is affixed to an internal surface of the cell.

3. An apparatus as claimed in claim 2 wherein said cathode connector is affixed to an internal surface of the cell by means of welding.

4. An apparatus as claimed in any one of claims 1, 2 or 3 wherein an electrical connection from the cathode container to the body or housing of the cell is provided by means of a cathode connector.

5. An apparatus as claimed in claim 4 wherein said electrical connection is provided by means of a press connection.

6. An apparatus as claimed in any preceding claim wherein said cathode connector comprises a cathode rail.

7. An apparatus as claimed in claim 6 wherein said rail is welded to the base of the cell.

8. An apparatus as claimed in any preceding claim wherein the cathode container comprises a mesh basket or metal oxide retaining vessel.

9. An apparatus as claimed in any preceding claim wherein the cathode container comprises an assembly of cathode containers.

10. An apparatus as claimed in claim 9 wherein said assembly comprises an assembly of mesh baskets or metal oxide retaining vessels.

11. An apparatus as claimed in any preceding claim wherein the anode is a carbon anode.

**12.** An apparatus as claimed in any preceding claim wherein the body or housing of the cell is maintained as the cathode by the provision of an electrical connection from a power supply to the body or housing of the cell.

**13.** A process for reducing to metallic form metal oxides, the said metal oxides comprising metal oxides present in spent nuclear fuel, the process comprising cathodically electrolysing the oxide in the presence of a molten salt electrolyte in an apparatus as claimed in any one of claims 1 to 12, the potential of the cathode being controlled so as to favour oxygen ionisation over deposition of metal from the cations present in the molten salt.

**14.** A process as claimed in claim 13 wherein the body or housing of the cell is maintained as the cathode and is brought into contact with the cathode container by means of a press connection between said container and a cathode connector.

**15.** A process as claimed in claim 13 or 14 wherein the oxide comprises the oxide of zirconium or bafnium.

**16.** A process as claimed in any one of claims 13 to 15 wherein the oxide comprises an actinide oxide.

**17.** A process as claimed in claim 16 wherein the actinide oxide comprises uranium oxide, irradiated uranium oxide or mixed uranium/plutonium oxide fuel pellets.

**18.** A process as claimed in claim 17 wherein the uranium oxide comprises uranium dioxide.

**19.** A process as claimed in any one of claims 13 to 18 wherein the oxide is located in a mesh basket which forms the cathode.

**20.** A process as claimed in any one of claims 13 to 19 wherein the molten salt electrolyte comprises at least one chloride salt.

**21.** A process as claimed in claim 20 wherein the chloride salt is $CaCl_2$ or $BaCl_2$.

**22.** A process as claimed in any one of claims 13 to 21 wherein the fuel is treated together with its cladding.

**23.** A process as claimed in any one of claims 13 to 21 wherein the cladding is removed from the fuel prior to treatment.

**24.** A process as claimed in any of claims 13 to 23 wherein the metal resulting from the process is used as the feed for an electrorefining process.

**25.** A process as claimed in claim 24 wherein the electrorefining process is carried out in the same electrolytic cell as the electrolytic reduction process.

**Patentansprüche**

**1.** Vorrichtung zur Durchführung eines Verfahrens zur Reduktion von Metalloxiden in die metallische Form, wobei die genannten Metalloxide in verbrauchten Nuklearbrennstoffen vorhandene Metalloxide umfassen, wobei die Vorrichtung eine elektrochemische Zelle umfaßt, die ein(en) Körper oder Gehäuse, einen Kathodenbehälter und einen Kathodenverbinder umfaßt, wobei genannter/s Körper oder Gehäuse als die Kathode verwendet wird und die genannte chemische Zelle frei von Schraub- oder Gewindeverbindungen ist.

**2.** Vorrichtung nach Anspruch 1, wobei der genannte Kathodenverbinder an einer inneren Oberfläche der Zelle befestigt ist.

**3.** Vorrichtung nach Anspruch 2, wobei der Kathodenverbinder an einer inneren Oberfläche der Zelle mittels Schweißen befestigt ist.

**4.** Vorrichtung nach einem der Ansprüche 1, 2 oder 3, wobei eine elektrische Verbindung von dem Kathodenbehälter zu dem Körper oder Gehäuse der Zelle mittels eines Kathodenverbinders bereitgestellt ist.

**5.** Vorrichtung nach Anspruch 4, wobei der genannte elektrische Verbinder mittels einer Preßverbindung bereitgestellt ist.

**6.** Vorrichtung nach einem der vorangehenden Ansprüche, wobei der gekannte Kathodenverbinder eine Kathodenschiene umfaßt.

**7.** Vorrichtung nach Anspruch 6, wobei die genannte Schiene an die Basis der Zelle geschweißt ist.

**8.** Vorrichtung nach einem der vorangehenden Ansprüche, wobei der Kathodenbehälter ein(en) Gitterkorb oder Matalloxid-Rückhaltegefäß umfaßt.

**9.** Vorrichtung nach einem der vorangehenden Ansprüche, wobei der Kathodenbehälter eine Anordnung von Kathodenbehältern umfaßt.

**10.** Vorrichtung nach Anspruch 9, wobei die genannte Anordnung eine Anordnung von Gitterkörben oder Metalloxid-Rückhaltegefäßen umfaßt.

**11.** Vorrichtung nach einem der vorangehenden Ansprüche, wobei die Anode eine Kohlenstoffanode ist.

**12.** Vorrichtung nach einem der vorangehenden Ansprüchen, wobei der/das Körper oder Gehäuse der Zelle durch Bereitstellung einer elektrischen Verbindung von einer Stromzufuhr zu dem Körper/Gehäuse der Zelle als Kathode verwendet wird.

**13.** Verfahren zur Reduktion von Metalloxiden in die metallische Form, wobei die genannten Metalloxide in verbrauchtem Nuklearbrennstoff vorhandene Metalloxide umfassen, wobei das Verfahren kathodisches Elektrolysieren des Oxids in Anwesenheit eines Salzschmelze-Elektrolyts in einer Vorrichtung gemäß einem der Ansprüche 1 - 12 umfaßt, wobei das Potential der Kathode so geregelt ist, daß Sauerstoff-Ionisierung gegenüber Metallablagerung von den in der Salzschmelze vorhandenen Kationen bevorzugt wird.

**14.** Verfahren nach Anspruch 13, wobei der/das Körper oder Gehäuse der Zelle als Kathode verwendet wird und in Kontakt mit dem Kathodenbehälter mittels einer Preßverbindung zwischen dem genannten Behälter und einem Kathodenverbinder gebracht wird.

**15.** Verfahren nach Anspruch 13 oder 14, wobei das Oxid Zirkoniumoxid oder Hafniumoxid umfaßt.

**16.** Verfahren nach einem der Ansprüche 13 bis 15, wobei das Oxid ein Actinidenoxid umfaßt.

**17.** Verfahren nach Anspruch 16, wobei das Actinidenoxid Uranoxid, abgebranntes Uranoxid oder gemischte Uran/Plutoniumoxid-Brennstofftabletten umfaßt.

**18.** Verfahren nach Anspruch 17, wobei das Uranoxid Urandioxid umfaßt.

**19.** Verfahren nach einem der Ansprüche 13 bis 18, wobei das Oxid in einem Gitterkorb angeordnet ist, der die Kathode bildet.

**20.** Verfahren nach einem der Ansprüche 13 bis 19, wobei das Salzschmelzen-Elektrolyt mindestes ein Chloridsalz umfaßt.

**21.** Verfahren nach Anspruch 20, wobei das Cloridsalz $CaCl_2$ oder $BaCl_2$ ist.

**22.** Verfahren nach einem der Ansprüche 13 bis 21, wobei der Brennstoff zusammen mit seiner Umhüllung behandelt wird.

**23.** Verfahren nach einem der Ansprüche 13 bis 21, wobei die Umhüllung von dem Brennstoff vor der Behandlung entfernt wird.

**24.** Verfahren nach einem der Ansprüche 13 bis 23, wobei das aus dem Verfahren resultierende Metall als Ausgangsstoff für eine elektrolytisches Raffinationsverfahren verwendet wird.

**25.** Verfahren nach Anspruch 24, wobei das elektrolytische Raffinationsverfahren in der gleichen elektrolytischen Zelle ausgeführt wird wie das elektrolytische Reduktionsverfahren.

### Revendications

**1.** Dispositif pour mettre en oeuvre un procédé en vue de réduire sous forme métallique des oxydes métalliques, lesdits oxydes métalliques comprenant des oxydes métalliques présents dans un carburant nucléaire épuisé, **caractérisé en ce que** le dispositif comprend une cellule électrochimique qui comporte un corps ou un logement, un compartiment cathodique, et un connecteur de cathode, ledit corps ou logement étant maintenu en tant que cathode, et ladite cellule électrochimique étant libre de toute fixation boulonnée ou vissée.

**2.** Dispositif selon la revendication 1, **caractérisé en ce que** ledit connecteur de cathode est fixé sur une surface interne de la cellule.

**3.** Dispositif selon la revendication 2, **caractérisé en ce que** ledit connecteur de cathode est fixé sur une surface interne de la cellule par soudure.

**4.** Dispositif selon l'une des revendications 1, 2 ou 3, **caractérisé en ce qu'**une connexion électrique issue du compartiment cathodique vers le corps ou le logement de la cellule est prévue au moyen d'un connecteur de cathode.

**5.** Dispositif selon la revendication 4, **caractérisé en ce que** ladite connexion électrique est prévue au moyen de connexion de type à pression.

**6.** Dispositif selon l'une des revendications précédentes, **caractérisé en ce que** ledit connecteur de cathode comprend un rail de cathodes.

**7.** Dispositif selon la revendication 6, **caractérisé en ce que** ledit rail est soudé à la base de la cellule.

**8.** Dispositif selon l'une des revendications précédentes, **caractérisé en ce que** le compartiment cathodique comprend un réceptacle maillé ou une cuve de rétention d'oxyde métallique.

**9.** Dispositif selon l'une des revendications précédentes, **caractérisé en ce que** le compartiment cathodique comprend un ensemble de compartiments cathodiques.

**10.** Dispositif selon la revendication 9, **caractérisé en ce que** ledit ensemble comprend un ensemble de réceptacles maillés ou de cuves de rétention d'oxyde métallique.

**11.** Dispositif selon l'une des revendications précédentes, **caractérisé en ce que** l'anode est une anode de carbone.

**12.** Dispositif selon l'une des revendications précédentes, **caractérisé en ce que** le corps ou le logement de la cellule est maintenu en tant que cathode par l'intermédiaire d'une connexion électrique reliée à une alimentation d'énergie vers le corps ou le logement de la cellule.

**13.** Procédé pour réduire sous forme métallique des oxydes métalliques, lesdits oxydes métalliques comprenant des oxydes métalliques présents dans un carburant nucléaire épuisé, le procédé comprenant l'électrolyse cathodique de l'oxyde en présence d'un électrolyte de sel fondu dans un dispositif selon l'une des revendications 1 à 12, le potentiel de la cathode étant contrôlé afin de privilégier l'ionisation de l'oxygène par rapport au dépôt de métal issu des cations présents dans le sel fondu.

**14.** Procédé selon la revendication 13, **caractérisé en ce que** le corps ou le logement de la cellule est maintenu en tant que cathode et est mis en contact avec le compartiment cathodique au moyen de connexion de type à pression entre lesdits compartiments et un connecteur de cathode.

**15.** Procédé selon l'une des revendications 13 ou 14, **caractérisé en ce que** l'oxyde comprend l'oxyde de zirconium ou de hafnium.

**16.** Procédé selon l'une des revendications 13 à 15, **caractérisé en ce que** l'oxyde comprend un oxyde actinide.

**17.** Procédé selon la revendication 16, **caractérisé en ce que** l'oxyde actinide comprend de l'oxyde d'uranium, de l'oxyde d'uranium irradié ou des pastilles de combustion d'oxyde d'uranium/plutonium mélangés.

**18.** Procédé selon la revendication 17, **caractérisé en ce que** l'oxyde d'uranium comprend du dioxyde d'uranium.

**19.** Procédé selon l'une des revendications 13 à 18, **caractérisé en ce que** l'oxyde est situé dans un réceptacle maillé qui forme la cathode.

**20.** Procédé selon l'une des revendications 13 à 19, **caractérisé en ce que** l'électrolyte de sel fondu comprend au moins un sel de chlorure.

**21.** Procédé selon la revendication 20, **caractérisé en ce que** le sel de chlorure est du $CaCl_2$ ou du $BaCl_2$.

**22.** Procédé selon l'une des revendications 13 à 21, **caractérisé en ce que** le carburant et son revêtement sont traités ensemble.

**23.** Procédé selon l'une des revendications 13 à 21, **caractérisé en ce que** le revêtement est enlevé du carburant avant traitement.

**24.** Procédé selon l'une des revendications 13 à 23, **caractérisé en ce que** le métal résultant du procédé est utilisé comme alimentation pour un procédé d'électroraffinage.

**25.** Procédé selon la revendication 24, **caractérisé en ce que** le procédé d'électroraffinage est effectué dans la même cellule électrochimique que le procédé de réduction électrolytique.

FIG. 1